# EUROPÄISCHE PATENTANMELDUNG

(11) **EP 3 026 032 A1**
(43) Veröffentlichungstag der Anmeldung: **01.06.2016**
(21) Anmeldenummer: 14194810.9
(22) Anmeldetag: 25.11.2014
(51) Int. Cl.: C04B 28/02, C04B 40/00

(54) **Zusatzmittel für eine hydraulisch härtbare Zusammensetzung**

(71) Anmelder: PORISMA Trading GmbH, 4300 St. Valentin/NÖ (AT)
(72) Erfinder: Millneritsch, Franz Gerald, 4300 St. Valentin/ NÖ (AT)
(74) Vertreter: Jell, Friedrich

(57) **Zusammenfassung**

Es wird ein Zusatzmittel für eine hydraulisch härtbare Zusammensetzung und ein Verfahren zu dessen Herstellung gezeigt. Um die Reproduzierbarkeit des Verfahrens zu erhöhen, wird vorgeschlagen, dass einem flüssigen, insbesondere unbehandelten, Fermentationsrest aus einem Hefeerzeugungsprozess mit einem Zuckergehalt kleiner 3 Gew.-%, insbesondere mit 0,5 Gew.-% Zuckergehalt, ein Biozid und ein Entschäumer, insbesondere gleichzeitig, hinzugegeben werden.

## Beschreibung

Die Erfindung betrifft ein Verfahren zur Herstellung eines Zusatzmittels und ein Zusatzmittel für eine hydraulisch härtbare Zusammensetzung, mit einem flüssigen Fermentationsrest aus einer Biomasse und mit zumindest einem Biozid.

Um ein Zusatzmittel zu schaffen, das auf hydraulisch härtbare Zusammensetzungen verflüssigend und wasserreduzierend wirkt, ist es aus dem Stand der Technik bekannt (CN102020431B), einen Fermentationsrest aus der Ethanolproduktion, welcher bei der Destillation von Zuckerrohr-Melasse anfällt, in mehreren Verfahrensschritten physikalisch und chemisch zu konzentrieren und aufzureinigen. Nachteilig bedarf es hierfür einer Vielzahl technisch vergleichsweise aufwendiger Aufbereitungsschritte - unter anderem bedingt durch den vergleichsweise hohen Restzuckergehalt. Zudem ist auch ein vergleichsweise hoher Gehalt an biologisch aktiven Bestandteilen erforderlich. Letzteres erzwingt zusätzlich eine vergleichsweise hohe Menge an Biozid.

Die Erfindung hat sich daher ausgehend vom eingangs geschilderten Stand der Technik die Aufgabe gestellt, ein Verfahren zur Herstellung eines Zusatzmittels für eine hydraulisch härtbare Zusammensetzung zur Verfügung zu stellen, das sich durch Kosteneffizienz sowie Einfachheit und damit hohe Reproduzierbarkeit auszeichnet.

Die Erfindung löst die gestellte Aufgabe hinsichtlich des Verfahrens dadurch, dass einem flüssigen, insbesondere unbehandelten, Fermentationsrest aus einem Hefeerzeugungsprozess mit einem Zuckergehalt kleiner 3 Gew.-%, insbesondere mit 0,5 Gew.-% Zuckergehalt, ein Biozid und ein Entschäumer, insbesondere gleichzeitig, hinzugegeben werden.

Werden einem flüssigen Fermentationsrest aus einem Hefeerzeugungsprozess mit einem Zuckergehalt kleiner 3 Gew.-% ein Biozid und ein Entschäumer hinzugegeben, so kann ein kostengünstiges Zusatzmittel für eine hydraulisch härtbare Zusammensetzung hergestellt werden - und zwar unter Vermeidung technisch vergleichsweise aufwendiger Aufbereitungsschritte. Die in der Hefeindustrie anfallenden Fermentationsreste, insbesondere Vinasse aus der Fermentation von Zuckerrübenmelasse, können nämlich das Herstellungsverfahren erheblich vereinfachen, weil dieser besondere Fermentationsrest per se sowohl einen geringen Restzuckergehalt, als auch einen geringen Gehalt an biologisch aktiven Stoffen führt. Es muss beim Fermentationsrest lediglich darauf geachtet werden, dass dessen Zuckergehalt kleiner 3 Gew.-% (der organischen Trockensubstanz) ist, um die Gefahr einer nachteilig verzögernden Wirkung auf die Aushärtungsreaktion der hydraulisch härtbaren Zusammensetzung gering zu halten. Vorzugsweise weist der Fermentationsrest 0,5 Gew.-% Zuckergehalt auf, um diese vom Zuckergehalt ausgehenden, die Aushärtungsreaktion nachteilig beeinflussenden Effekte überhaupt zu vermeiden. Insbesondere Zuckerkonzentrationen von 0,5 Gew.-% und geringer können im Gegenteil eine positive, beschleunigende Wirkung auf die hydraulisch härtbare Zusammensetzung aufweisen und können demnach sogar erwünscht sein. Daneben kann sich ein Fermentationsrest aus der Hefeerzeugung durch seinen typischerweise sehr geringen Gehalt an biologisch aktiven Bestandteilen auszeichnen, da in solch einem Reststoff nahezu keine aktiven oder aktivierbaren Hefen mehr zu finden sind. Dies kann unter anderem die benötigte Biozid-Menge zur Stabilisierung der Zusammensetzung reduzieren, was das Verfahren reproduzierbarer und auch kostengünstiger machen kann. Das Verfahren kann sich weiter vereinfachen, wenn ein unbehandelter Fermentationsrest aus der Hefeerzeugung zur Herstellung des Zusatzmittels verwendet wird, welcher unbehandelter Fermentationsrest im Feststoffgehalt aufkonzentriert als Reststoff der Hefeerzeugung zur Verfügung steht. Auch kann die gleichzeitige Zugabe des Biozids und des Entschäumers den Fermentationsrest aus der Hefeerzeugung homogener stabilisieren und auch die Menge an benötigtem Biozid zusätzlich reduzieren.

Im Allgemeinen wird erwähnt, dass sich das erfindungsgemäße Zusatzmittel als Dispergiermittel für eine hydraulisch härtbare Zusammensetzung eignen kann. Im Allgemeinen wird weiter festgehalten, dass unter einer hydraulisch härtbaren Zusammensetzung insbesondere Beton, Estrich, Kalk-Putz, Gips und andere vergleichbare Zusammensetzungen verstanden werden können. Zudem wird im Allgemeinen erwähnt, dass die Biozide aus der Gruppe der Isothiazolinone (Isothiazol-3-on), insbesondere Methylisothiazolinon (MIT) oder Chlormethylisothiazolinon (CMIT), ausgewählt werden können. Im Allgemeinen wird weiter festgehalten, dass ein Entschäumer insbesondere aus der Alkoholalkoxylate enthaltende Gruppe ausgewählt werden kann.

Wird ein flüssiger Fermentationsrest mit einer organischen Trockensubstanz, aufweisend 43 bis 65 Gew.-% Rohprotein, 35 bis 54 Gew.-% Asche und maximal 3 Gew.-% Zucker verwendet, so kann die Anzahl an weiteren Aufbereitungsschritten des Fermentationsrests weiter reduziert werden - was das Verfahren weiter vereinfachen kann. Ein kostengünstiges Zusatzmittel kann damit also erzeugt werden.

Weist das Zusatzmittel mindestens 20 Gew.-% organische Trockensubstanz des Fermentationsrestes, maximal 5 Gew.-% Biozid und maximal 5 Gew.-% Entschäumer, sowie optional 10 bis 40 Gew.-% Alkali-/Erdalkalisalze und/oder 5 bis 80 Gew.-% Polycarboxylate und/oder bis 40 Gew.-% Polykondensate und als Rest Wasser sowie herstellungsbedingt unvermeidbare Verunreinigungen auf, können die Stabilisierung des Fermentationsrests und somit die Reproduzierbarkeit des Verfahrens verbessert werden. Zudem kann die verflüssigende Wirkung des Zusatzmittels weiter gesteigert werden. Durch die Zugabe von Polycarboxylaten, insbesondere Polycarboxylatether, und/oder Polykondensaten, insbesondere Naphthalinsulfonsäure-Formaldehyd-Kondensate oder Melaminsulfonsäure-Formaldehyd-Kondensate, als Verflüssiger können herstellungsbedingte Schwankungen in der Viskosität des Fermentationsrests ausgeglichen werden. Herstellungsbedingte Unterschiede im Zuckergehalt des Fermentationsrests und den damit zusammenhängenden nachteiligen Effekten auf die Aushärtungsreaktion der hydraulisch härtbaren Zusammensetzung können durch eine Zugabe von anorganischen Alkali- oder Erdalkalisalzen, insbesondere von Calciumnitrat, auf verfahrenstechnische Art und Weise kompensiert werden. Hierzu wird im Allgemeinen erwähnt, dass insbesondere schon geringe Konzentrationen an Calciumnitrat ausreichen können, besonders effektiv die negativen Effekte eines höheren Zuckergehalts (bis zu 3 Gew.-%) auszugleichen.

Die Reproduzierbarkeit des Verfahrens kann sich weiter verbessern, wenn das Zusatzmittel 30 bis 40 Gew.-% organische Trockensubstanz des Fermentationsrestes, sowie optional 15 bis 35 Gew.-% Alkali-/Erdalkalisalze und/oder 5 bis 50 Gew.-% Polycarboxylate und/oder 15 bis 30 Gew.-% Polykondensate aufweist.

Die Erfindung hat sich außerdem die Aufgabe gestellt, ausgehend vom eingangs geschilderten Stand der Technik ein Zusatzmittel für hydraulisch härtbare Zusammensetzungen zu schaffen, das bei gleichbleibend hoher Qualität deutlich kostengünstiger ist.

Die Erfindung löst die gestellte Aufgabe dadurch, dass das Zusatzmittel einen Entschäumer und einen, insbesondere unbehandelten, Fermentationsrest von einem Hefeerzeugungsprozess mit einem Zuckergehalt kleiner 3 Gew.-%, insbesondere von 0,5 Gew.-%, aufweist.

Weist das Zusatzmittel einen Entschäumer und einen, insbesondere unbehandelten, Fermentationsrest von einem Hefeerzeugungsprozess mit einem Zuckergehalt kleiner 3 Gew.-% auf, kann ein Zusatzmittel bereitgestellt werden, welches besonders positiv, wasserreduzierend und auch verflüssigend auf die hydraulisch härtbare Zusammensetzung wirken kann. Zugleich können durch den vergleichsweise geringen Zuckergehalt des Fermentationsrests von weniger als 3 Gew.-% (der organischen Trockensubstanz) die negativen Effekte, wie etwa eine verzögernde Wirkung auf den Aushärteprozess, auf die hydraulisch härtbare Zusammensetzung gering gehalten werden. Vorzugsweise kann ein Zuckergehalt von 0,5 Gew.-% diese negativen Effekte weiter minimieren bzw. überhaupt vermeiden, wodurch ein hochqualitatives Zusatzmittel zur Verfügung gestellt werden kann. Die Zugabe eines Entschäumers zu dem Zusatzmittel sorgt dafür, die Druckfestigkeit der hydraulisch härtbaren Zusammensetzung zu erhöhen. Zudem kann die Konsistenz der hydraulisch härtbaren Zusammensetzung durch den Entschäumer weiter verbessert werden und damit auch die Wirkung des Biozids unterstützen. Auf diese Weise kann also selbst mit geringen Mengen an Biozid ein Auslangen gefunden werden - was unter anderem auch durch die vergleichsweise geringe Menge an Restzucker und biologisch aktiven Stoffen bzw. Hefen im Fermentationsrest begünstigt wird. Ein kostengünstiges Zusatzmittel kann sich dadurch ergeben.

Weist der flüssige Fermentationsrest eine organische Trockensubstanz mit 43 bis 65 Gew.-% Rohprotein, 35 bis 54 Gew.-% Asche und maximal 3 Gew.-% Zucker auf, kann eine Zusammensetzung für ein qualitativ hochwertiges Zusatzmittel bei gleichzeitig niedrigen Kosten ermöglicht werden.

Weist das Zusatzmittel mindestens 20 Gew.-% organische Trockensubstanz des Fermentationsrestes, max. 5 Gew.-% Biozid und max. 5 Gew.-% Entschäumer, sowie optional 10 bis 40 Gew.-% Alkali-/Erdalkalisalze und/oder 5 bis 80 Gew.-% Polycarboxylate und/oder maximal 40 Gew.-% Polykondensate und als Rest Wasser sowie herstellungsbedingt unvermeidbare Verunreinigungen auf, kann die Wirkung des Fermentationsrests auf die hydraulische Zusammensetzung weiter unterstützt werden. Es kann nämlich damit neben der auf die hydraulisch härtbare Zusammensetzung verflüssigenden Wirkung des Fermentationsrestes auch eine beschleunigende Wirkung auf die Aushärtereaktion, etwa durch die Zugabe von anorganischen Alkali- oder Erdalkalisalzen, insbesondere Calciumnitrat, ermöglicht werden. Daneben kann die Wirkung des Zusatzmittels weiter verbessert werden, indem zusätzlich zu dem Fermentationsrest andere Verflüssiger, wie etwa Polycarboxylate, insbesondere Polycarboxylatether, oder verschiedene Polykondensate, insbesondere Naphthalinsulfonsäure-Formaldehyd-Kondensat und Melaminsulfonsäure-Formaldehyd-Kondensat, zugegeben werden. In diesem Zusammenhang haben sich insbesondere Naphthalinsulfonsäure-Formaldehyd-Kondensate als besonders effektive Verflüssiger bewährt. Die Beimischung eines Biozids in einer geeigneten Konzentration stellt zudem sicher, dass das in dem Fermentationsrest enthaltene, biologisch aktive Material inaktiviert wird - womit die Haltbarkeit der hydraulisch härtbaren Zusammensetzung verbessert wird und eine eventuelle Geruchsbelastung durch ebendiese vermieden werden kann. Die Beimengung eines Entschäumers erhöht außerdem die Druckfestigkeit der hydraulisch härtbaren Zusammensetzung und kann deren Verarbeitungsfähigkeit zusätzlich verbessern.

Weist das Zusatzmittel 30 bis 40 Gew.-% organische Trockensubstanz des Fermentationsrestes, sowie optional 15 bis 35 Gew.-% Alkali-/Erdalkalisalze und/oder 5 bis 50 Gew.-% Polycarboxylate und/oder 15 bis 30 Gew.-% Polykondensate auf, so kann ein besonders wirkungsvolles, qualitativ hochwertiges Zusatzmittel bei gleichzeitig niedrigen Kosten zur Verfügung gestellt werden - welches zudem besonders einfach herstellbar ist.

Die Erfindung hat sich außerdem die Aufgabe gestellt, die Fließeigenschaften und die plastifizierenden Eigenschaften von hydraulisch härtbaren Zusammensetzungen, insbesondere von Beton, zu verbessern.

Die Erfindung löst die gestellte Aufgabe dadurch, dass als Zusatzmittel, insbesondere als Dispergiermittel, für eine hydraulisch härtbare Zusammensetzung, insbesondere für Beton, ein Biozid, ein Entschäumer und ein flüssiger Fermentationsrest aus einem Hefeerzeugungsprozess mit einem Zuckergehalt kleiner gleich 3 Gew.-%, insbesondere mit 0,5 Gew.-% Zuckergehalt, verwendet wird.

Werden ein Biozid, ein Entschäumer und ein flüssiger Fermentationsrest aus einem Hefeerzeugungsprozess mit einem Zuckergehalt kleiner gleich 3 Gew.-%, insbesondere von 0,5 Gew.-% Zuckergehalt, als Zusatzmittel für eine hydraulisch härtbare Zusammensetzung, insbesondere Beton, verwendet, kann eine verbesserte Fließfähigkeit bei geringerer Wasserzugabe ermöglicht werden. Zusätzlich kann durch die Zugabe eines Biozids die Langzeitstabilität der hydraulisch härtbaren Zusammensetzung und des Fermentationsrestes verbessert werden. Durch die Zugabe eines Entschäumers kann die Druckfestigkeit des Betons erhöht und die Verarbeitungsfähigkeit weiter verbessert werden. Das Zusatzmittel kann vorzugsweise als Dispergiermittel dienen, unter anderem auch um die Durchmischung der hydraulisch härtbaren Zusammensetzung zu verbessern.

Im Folgenden wird die Erfindung beispielsweise anhand mehrerer Ausführungsvarianten näher erläutert:
Entsprechend einem ersten Ausführungsbeispiel weist das Zusatzmittel (Z1) folgende Zusammensetzung auf:

| | |
|---|---|
| 40 Gew.-% | Organische Trockensubstanz des Fermentationsrestes, |
| 0,1 Gew.-% | Entschäumer (Alkoholalkoxylat), |
| 0,3 Gew.-% | Biozid (Methylisothiazolinon), |
| 59,6 Gew.-% | Wasser. |

Das Zusatzmittel Z1 zeigt eine ausgezeichnete dispergierende Wirkung auf die Betonmischung und kann wirkungsvoll zur Reduzierung der benötigten Wassermenge eingesetzt werden. Gleichzeitig wird dabei die Fließfähigkeit des Betons erhöht und eine bessere Verarbeitbarkeit erreicht. Zudem kann bei Verwendung des Zusatzmittels Z1, bei gleichbleibender Konsistenz, die Bindemittelmenge, insbesondere Zement, reduziert werden. Ein solches Zusatzmittel kann demnach die Herstellung der Betonmischung besonders kostengünstig gestalten.

Entsprechend einem zweiten Ausführungsbeispiel weist das Zusatzmittel (Z2) folgende Zusammensetzung auf:

| | |
|---|---|
| 30 Gew.-% | Organische Trockensubstanz des Fermentationsrestes, |
| 20 Gew.-% | Beschleuniger (Calciumnitrat), |
| 0,1 Gew.-% | Entschäumer (Alkoholalkoxylat), |
| 0,3 Gew.-% | Biozid (Methylisothiazolinon), |
| 49,6 Gew.-% | Wasser. |

Durch das Beifügen eines Beschleunigers im Zusatzmittel Z2, kommt es zu einer deutlich erhöhten Frühfestigkeit des Frischbetons. Diese Eigenschaft kann äußerst effektiv in schnellhärtenden Betonmischungen eingesetzt werden wobei die Vernetzungszeit des Betons erhöht und damit die Ausschal- und Wartezeiten zwischen aufeinanderfolgenden Bauschritten deutlich reduziert werden können. Dabei kann ein standfester, schnellhärtender Beton auf einfache Weise mit einem vergleichsweise kostengünstigen Zusatzmittel Z2 hergestellt werden.

Entsprechend einem dritten Ausführungsbeispiel weist das Zusatzmittel (Z3) folgende Zusammensetzung auf:

| | |
|---|---|
| 20 Gew.-% | Organische Trockensubstanz des Fermentationsrestes, |
| 15 Gew.-% | Verflüssiger (Polycarboxylat), |
| 0,1 Gew.-% | Entschäumer (Alkoholalkoxylat), |
| 0,3 Gew.-% | Biozid (Methylisothiazolinon), |
| 64,6 Gew.-% | Wasser. |

Das Zusatzmittel Z3 zeigte eine deutliche Herabsetzung der Viskosität des Frischbetons. Dies führt in weiterer Folge zu einer verbesserten Verarbeitungsfähigkeit, besseren Verdichtbarkeit und dementsprechend zu einer verbesserten Standfestigkeit des Betons. Zudem verkürzt das Zusatzmittel Z3 die Mischdauer im Betonwerk, was dessen Erzeugung und Verarbeitung vereinfacht. Zudem ist das Zusatzmittel Z3 vergleichsweise kostengünstig herzustellen.

Entsprechend einem vierten Ausführungsbeispiel weist das Zusatzmittel (Z4) folgende Zusammensetzung auf:

| | |
|---|---|
| 20 Gew.-% | Organische Trockensubstanz des Fermentationsrestes, |
| 20 Gew.-% | Verflüssiger (Naphtalinsulfonsäure-Formaldehyd-Kondensat), |
| 0,1 Gew.-% | Entschäumer (Alkoholalkoxylat), |
| 0,3 Gew.-% | Biozid (Methylisothiazolinon), |
| 59,6 Gew.-% | Wasser. |

Versuchsreihen zum Zusatzmittel Z4 zeigten eine zeitliche Verlängerung der Verarbeitungsfähigkeit des Frischbetons unter Beibehaltung der gewünschten Verarbeitungskonsistenz. Zudem zeichnet sich Z4 in der Kosteneffizienz in seiner Herstellung aus.

## Patentansprüche

1. Verfahren zur Herstellung eines Zusatzmittels für eine hydraulisch härtbare Zusammensetzung, bei welchem einem flüssigen, insbesondere unbehandelten, Fermentationsrest aus einem Hefeerzeugungsprozess mit einem Zuckergehalt kleiner 3 Gew.-%, insbesondere mit 0,5 Gew.-% Zuckergehalt, ein Biozid und ein Entschäumer, insbesondere gleichzeitig, hinzugegeben werden.

2. Verfahren nach Anspruch 1, **dadurch gekennzeichnet, dass** ein flüssiger Fermentationsrest mit einer organischen Trockensubstanz, aufweisend
| | |
|---|---|
| 43 bis 65 | Gew.-% Rohprotein, |
| 35 bis 54 | Gew.-% Asche und |
| max.3 | Gew.-% Zucker |
verwendet wird.

3. Verfahren nach Anspruch 2 oder 3, **dadurch gekennzeichnet, dass** das Zusatzmittel
| | |
|---|---|
| min. 20 | Gew.-% organische Trockensubstanz des Fermentationsrestes, |
| max. 5 | Gew.-% Biozid und |
| max. 5 | Gew.-% Entschäumer, |
sowie optional
| | |
|---|---|
| 10 bis 40 | Gew.-% Alkali-/Erdalkalisalze und/oder |
| 5 bis 80 | Gew.-% Polycarboxylate und/oder |
| bis 40 | Gew.-% Polykondensate |
und als Rest Wasser sowie herstellungsbedingt unvermeidbare Verunreinigungen aufweist.

4. Verfahren nach Anspruch 3, **dadurch gekennzeichnet, dass** das Zusatzmittel 30 bis 40 Gew.-% organische Trockensubstanz des Fermentationsrestes, sowie optional
| | |
|---|---|
| 15 bis 35 | Gew.-% Alkali-/Erdalkalisalze und/oder |
| 5 bis 50 | Gew.-% Polycarboxylate und/oder |
| 15 bis 30 | Gew.-% Polykondensate |
aufweist.

5. Zusatzmittel für eine hydraulisch härtbare Zusammensetzung mit mindestens einem flüssigen Fermentationsrest aus einer Biomasse und mit zumindest einem Biozid, **dadurch gekennzeichnet, dass** das Zusatzmittel einen Entschäumer und einen, insbesondere unbehandelten, Fermentationsrest von einem Hefeerzeugungsprozess mit einem Zuckergehalt kleiner 3 Gew.-%, insbesondere von 0,5 Gew.-%, aufweist.

6. Zusatzmittel nach Anspruch 5, **dadurch gekennzeichnet, dass** der flüssige Fermentationsrest eine organische Trockensubstanz mit
| | |
|---|---|
| 43 bis 65 | Gew.-% Rohprotein, |
| 35 bis 54 | Gew.-% Asche und |
| max. 3 | Gew.-% Zucker |
aufweist.

7. Zusatzmittel nach Anspruch 5 oder 6, **dadurch gekennzeichnet, dass** das Zusatzmittel
| | |
|---|---|
| min. 20 | Gew.-% organische Trockensubstanz des Fermentationsrestes, |
| max. 5 | Gew.-% Biozid und |
| max. 5 | Gew.-% Entschäumer, |
sowie optional
| | |
|---|---|
| 10 bis 40 | Gew.-% Alkali-/Erdalkalisalze und/oder |
| 5 bis 80 | Gew.-% Polycarboxylate und/oder |
| max. 40 | Gew.-% Polykondensate |
und als Rest Wasser sowie herstellungsbedingt unvermeidbare Verunreinigungen aufweist.

8. Zusatzmittel nach Anspruch 7, **dadurch gekennzeichnet, dass** das Zusatzmittel 30 bis 40 Gew.-% organische Trockensubstanz des Fermentationsrestes, sowie optional
| | |
|---|---|
| 15 bis 35 | Gew.-% Alkali-/Erdalkalisalze und/oder |
| 5 bis 50 | Gew.-% Polycarboxylate und/oder |
| 15 bis 30 | Gew.-% Polykondensate |
aufweist.

9. Verwendung von einem Biozid, einem Entschäumer und einem flüssigen Fermentationsrest aus einem Hefeerzeugungsprozess mit einem Zuckergehalt kleiner gleich 3 Gew.-%, insbesondere von 0,5 Gew.-% Zuckergehalt, als Zusatzmittel, insbesondere Dispergiermittel, für eine hydraulisch härtbare Zusammensetzung, insbesondere für Beton.
